# EUROPÄISCHE PATENTANMELDUNG

(11) **EP 4 512 790 A1**
(43) Veröffentlichungstag der Anmeldung: **26.02.2025**
(21) Anmeldenummer: 24195799.2
(22) Anmeldetag: 22.08.2024
(51) Int. Cl.: C04B 35/80, C04B 35/83

(54) **FASERVERBUNDKERAMIK FÜR EINE ELEKTROTECHNISCHE ANWENDUNG, VERFAHREN ZUR HERSTELLUNG EINER SOLCHEN FASERVERBUNDKERAMIK UND VERWENDUNG EINER SOLCHEN FASERVERBUNDKERAMIK**

(30) Priorität: 23.08.2023 DE 102023122611
(71) Anmelder: Deutsches Zentrum für Luft- und Raumfahrt e.V., 53227 Bonn (DE)
(72) Erfinder: Friedrich, Lion, 70565 Stuttgart (DE); Klopsch, Linda, 70173 Stuttgart (DE); Bremer, Gerrit, 26123 Oldenburg (DE); Geißendörfer, Stefan, 26126 Oldenburg (DE)
(74) Vertreter: Heuking Kühn Lüer Wojtek PartGmbB

(57) **Zusammenfassung**

Die Erfindung betrifft eine Faserverbundkeramik für eine elektrotechnische Anwendung, ein Verfahren zur Herstellung einer solchen Faserverbundkeramik sowie die Verwendung einer solchen Faserverbundkeramik. Das erfindungsgemäße Verfahren zur Herstellung eines faserverbundkeramischen Materials (CMC) für eine elektrotechnische Anwendung weist die Schritte Bereitstellung (100) von Fasern aus mindestens zwei verschiedenen Werkstoffen mit einer Faserlänge von jeweils weniger als 1 mm; Vermischen (200) der bereitgestellten Fasern mit einem Pulverharz; Verpressen (300) der Mischung der Fasern mit dem Pulverharz; und Keramisierung (410, 420, 430, 440) des Pulverharzes auf.

## Beschreibung

Die Erfindung betrifft eine Faserverbundkeramik für eine elektrotechnische Anwendung, ein Verfahren zur Herstellung einer solchen Faserverbundkeramik sowie die Verwendung einer solchen Faserverbundkeramik.

Keramische Werkstoffe, im Folgenden auch Keramiken genannt, sind anorganische, nichtmetallische, in Wasser schwer lösliche und zu wenigstens 30 % kristalline Stoffe. In der Regel werden sie bei Raumtemperatur aus einer Rohmasse geformt und erhalten ihre typischen Werkstoffeigenschaften durch eine Temperaturbehandlung bei meist über 800°C. Bei Keramiken für technische Einsatzgebiete liegt diese Temperatur üblicherweise bei 1.000°C bis zu 2.000°C und mehr. Es existieren jedoch noch weitere Definitionen. So wird der Begriff im anglo-amerikanischen Sprachraum für alle festen Werkstoffe aus anorganischen Verbindungen mit nichtmetallischen Eigenschaften verwendet, was auch Halbleiter wie Silizium oder Galliumarsenid oder Edelsteine wie Saphir mit einschließt. Zwar sind neben Sauerstoff und Silizium Metalle oft die Hauptbestandteile von Keramik, sie liegen jedoch nicht in metallischer Form, sondern vorwiegend als Oxide vor. Der Begriff nicht-metallisch bezieht sich hier auf die Eigenschaften des Werkstoffes wie elektrische Leitfähigkeit, Wärmeleitfähigkeit oder Duktilität.

Von **Fasern** wird im Allgemeinen gesprochen, wenn ein längenförmiges Gebilde ein Längen/Durchmesser-Verhältnis von größer drei aufweist. Material mit einem Längen/Durchmesser-Verhältnis von kleiner drei wird als **Füllstoff** bezeichnet.

**Keramiken** können durch **Keramisierung** aus monolithischen Bestandteilen oder im Faser-Matrix-Verbund hergestellt werden. Solche Faser-Matrix-Verbundkeramiken werden auch als **CMC** - Ceramic Matrix Composites, also keramischer Faserverbundwerkstoff oder **faserverbundkeramisches Material,** bezeichnet. Dabei lassen sich Keramiken beispielsweise in Karbidkeramiken, d.h. Keramiken auf Basis von Kohlenstoff, und Oxidkeramiken, d.h. auf Basis von Sauerstoff, einteilen. Im Vergleich zu Metallen weisen Keramiken höhere Einsatztemperaturen auf. Charakteristisch für keramische Verbundstrukturen sind ihre hohe Beständigkeit gegen Thermoschocks, mechanische Schädigung und ihre charakteristische im Verhältnis hohe Bruchdehnung. Durch solche Lasten hervorgerufenes Risswachstum kann durch Faserbestandteile gestoppt und somit Rissenergie abgebaut werden. Zur Faserverbundkeramikherstellung sind meist ein Formgebungsprozess und mehrere Hochtemperaturprozesse nötig. Formgebungsprozesse stammen meist aus dem Bereich der Faserverbundkunststofftechnik und umfassen beispielsweise Pressen, das **RTM** (Resin-Transfer-Molding) - Verfahren, Wickelverfahren und Formgebungsprozesse in einem Autoklav unter thermischer Behandlung unter Überdurck. Dabei wird vor oder während des Prozesses ein Präcursormaterial in ein definiertes Gerüst aus Fasern infiltriert und anschließend beispielsweise unter Druck und Temperatur ausgehärtet. Anschließend kann der Präcursor durch unterschiedliche Verfahren zur keramischen Matrix umgewandelt werden.

Es ist bekannt, dass für jede Harz/Faser-Kombination ein eigenes Verfahren mit festgelegter maximaler Temperatur, Haltezeit, Heizrate und Ofenatmosphäre ausgewählt werden muss.

In elektrotechnischen Anwendungen werden je nach Aufgabe unterschiedliche Materialien mit unterschiedlichen spezifischen Widerständen, auch **Resistivitäten** genannt, verwendet. Materialien mit einer Resistivität von kleiner 10² Ωmm²/m werden als **Leiter** bezeichnet. Leitfähige Materialien, beispielsweise Metalle, kommen häufig in Kristallgitterstrukturen vor, deren Elektronen frei beweglich sind und damit hohe Leitfähigkeiten ermöglichen. **Isolatoren,** wie beispielsweise Kunststoffe oder Glas, weisen eine Resistivität von größer 10¹² Ωmm²/m auf. Anders als Leiter haben Isolatoren einen großen Abstand zwischen dem Leitungsband und dem Valenzband. Resistivitäten von **Halbleitern,** wie beispielsweise Silizium, befinden sich zwischen diesen beiden Grenzen. Kristallgitter von Halbleitern weisen stabile Elektronenverbindungen auf. Bei hohen Temperaturen steigen Elektronen vom Valenzband ins Leitungsband auf und der Widerstand sinkt ab. In elektrotechnischen Anwendungen kommen Leiter, Halbleiter und Isolatoren meistens in Kombination zum Einsatz. Zum Beispiel bestehen die stromführenden Komponenten von Stromkabeln aus Metall wie etwa Kupfer als Leiter und einer Kunststoffummantelung als Isolator. Komplexere Anwendungen wie beispielsweise Schaltanlagen enthalten zusätzlich Schmelzsicherungen, Löschgase, mechanische Abnehmer oder Pyrotechnik, um beispielsweise den Stromfluss zu unterbrechen. In der Chipherstellung dienen Siliziumwaver als Grundplatte, welche in chemischen Verfahren mit Beschichtungsmustern aus Leitungs- und Isolatormaterial überzogen werden.

Bei hochtemperatureingesetzten elektrotechnischen Anwendungen können die Isolatoren aus Kunststoff, die Leiter aus Metall und sogar das Silizium aufschmelzen. Außerdem wird der Einsatz von Schwefelhexafluorid (SF₆) als Isolier- und Löschgas als Isolationsmittel bzw. zum Löschen von Schaltlichtbögen in Mittel- und Hochspannungsanlagen von der EU bis 2030 verboten, da es 23.000mal klimaschädlicher als CO₂ ist. Dabei ist auch der Wartungsaufwand von SF₆ geführten Anlagen mit erheblichen Kosten und Dokumentationspflichten verbunden. Fließt in Schaltanlagen dauerhaft ein zu hoher Strom oder wird ein sehr hoher Kurzschlussstrom erwartet, können Schmelz- oder Pyrotechnikelemente verwendet werden, um den Stromkreis zu unterbrechen. Diese sind jedoch nicht wiederverwendbar und müssen daher nach einer Auslösung erst ausgetauscht werden, bevor die Schaltanlage wieder in Betrieb gehen kann.

Metallische Oberflächen von Silberkontakten neigen unter zyklischer thermomechanischer Belastung zu Abrieberscheinungen. Es entstehen dadurch Rillen oder Ausbrüche im Material. Dies führt bei der Stromübertragung von Material zu Kontaktabnehmer zu Kontaktproblemen.

In der internationalen Patentanmeldung WO2021123314A1 wird eine Vorrichtung zur Unterbrechung oder zum Schließen eines elektrischen Stromkreises mit einem Kontaktstück, das ein dotiertes Keramikmaterial aufweist, offenbart. Dieses Kontaktstück ist zwar für hohe Einsatztemperaturen geeignet, ist jedoch nicht thermoschockbeständig und kann bei schlagartiger Beaufschlagung von thermalen Lasten zerspringen.

Faserverbundkeramiken sind thermoschockbeständig. Bekannte Verbundkeramiken können je nach eingesetzter Präcursor-/Faserkombination sowohl als Leiter als auch als Isolator dienen, jedoch sind keine Faserverbundkeramiken bekannt, die den Resistivitätsbereich von 10⁴ Ωmm²/m bis 10⁷ Ωmm²/m abdecken. Hinzu kommt, dass die Resistivitäten von verfügbaren Faserverbundkeramiken nicht variabel einstellbar sind. Darüber hinaus weisen bekannte Faserverbundkeramiken starke Schwankungen ihrer Resistivitäten auf, da das Verhältnis von Faserquerschnitt zu Matrixanteil innerhalb des Verbundes flächenmäßig grob verteilt ist. Dies bedeutet, dass die Homogenität der Leitfähigkeit nicht gewährleistet ist, da je nach Position der Kontaktierung entweder der Bereich des Faserquerschnitts oder der Matrix in den elektrischen Kreis eingebracht wird.

Um den fehlenden Resistivitätsbereich abzudecken, wurden bereits Versuche mit einer Vermischung von Keramikarten durchgeführt. Eine Mischung von zwei oder mehr Faserarten sowie unterschiedlichen Matrixsystemen in einem Material wurde bisher nicht in Betracht gezogen, da eine Schädigung der Fasern, Aufplatzung der Matrix und Bildung von schädlichen Reaktionsprodukten die Folge sein kann. Diese Risiken werden maßgeblich von unterschiedlichen Ausdehnungskoeffizienten der Fasern, der schlagartigen Entstehung von Pyrolysegas bei überhöhter Temperatur für die Matrix sowie von der chemischen Interaktion zwischen dem Material selbst oder zwischen Material und der Ofenatmosphäre hervorgerufen.

Aufgabe der Erfindung ist es, ein faserverbundkeramisches Material anzugeben, das für elektrotechnische Anwendungen einsetzbar ist und die Nachteile von bekannten faserverbundkeramischen Materialien minimiert. Weiterhin ist es Aufgabe der Erfindung, ein Herstellverfahren für ein solches faserverbundkeramisches Material anzugeben. Schließlich ist es Aufgabe der Erfindung, eine Verwendung eines solchen faserverbundkeramischen Materials anzugeben.

Erfindungsgemäß wird die erste Aufgabe durch ein faserverbundkeramisches Material mit den Merkmalen des unabhängigen Anspruches 1 gelöst. Vorteilhafte Weiterbildungen des faserverbundkeramischen Materials ergeben sich aus den Unteransprüchen 2 bis 6. Weiterhin wird die zweite Aufgabe der Erfindung durch ein Verfahren gemäß Anspruch 7 gelöst. Vorteilhafte Weiterbildung des Verfahrens ergeben sich aus den Unteransprüchen 8 bis 9. Schließlich wird die weitere Aufgabe der Erfindung durch eine Verwendung eines faserverbundkeramischen Materials oder eines faserverbundkeramischen Materials, das mit dem angegebenen Verfahren hergestellt ist, gemäß Anspruch 10 gelöst.

Ein erfindungsgemäßes faserverbundkeramisches Material für eine elektrotechnische Anwendung weist eine Mehrzahl von Fasern aus mindestens zwei verschiedenen Werkstoffen auf, die in eine keramische Matrix eingebettet sind, wobei die Mehrzahl von Fasern jeweils eine Faserlänge von weniger als 12, bevorzugt von weniger als 1 mm aufweisen.

### Begrifflich sei dabei folgendes erklärt:

Zunächst sei ausdrücklich darauf hingewiesen, dass im Rahmen der hier vorliegenden Patentanmeldung unbestimmte Artikel und Zahlenangaben wie "ein", "zwei" usw. im Regelfall als "mindestens"-Angaben zu verstehen sein sollen, also als "mindestens ein...", "mindestens zwei..." usw., sofern sich nicht aus dem jeweiligen Kontext ausdrücklich ergibt oder es für den Fachmann offensichtlich oder technisch zwingend ist, dass dort nur "genau ein...", "genau zwei..." usw. gemeint sein können. Weiterhin sind alle Zahlenangaben sowie Angaben zu Verfahrensparametern und/oder Vorrichtungsparametern im technischen Sinne zu verstehen, d.h. als mit den üblichen Toleranzen versehen zu verstehen. Auch aus der expliziten Angabe der Einschränkung "wenigstens" oder "mindestens" o.ä. darf nicht geschlossen werden, dass bei der einfachen Verwendung von "ein", also ohne die Angabe von "wenigstens" o.ä., ein "genau ein" gemeint ist.

Unter einer "**Matrix**" wird in diesem Dokument ein Material verstanden, in das ein anderer oder mehrere andere Materialien einbettbar ist bzw. sind.

Unter "**eingebettet**" wird in diesem Dokument verstanden, dass die Fasern in die Matrix eingefügt sind, d.h. von dem Matrixwerkstoff umschlossen sind.

Unter dem Begriff "**Porosität**" wird in diesem Dokument eine dimensionslose Messgröße verstanden, die das Verhältnis von Hohlraumvolumen zu Gesamtvolumen eines Stoffes oder Stoffgemisches darstellt. Sie dient als klassifizierendes Maß für die tatsächlich vorliegenden Hohlräume.

Unter dem Begriff "**Werkstoff**" in dem Ausdruck "eine Mehrzahl von Fasern aus mindestens zwei verschiedenen Werkstoffen" sollen hier und im Folgenden auch Werkstoffe verstanden werden, deren Unterschied auf der Beimischung unterschiedlicher Füllstoffe basiert. Mit anderen Worten können die unterschiedlichen Werkstoffe auch dadurch realisiert sein, dass eine Faserart ohne Füllstoff oder mit einem ersten Füllstoff gemischt ist, während ein davon unterschiedlicher Werkstoff dieselbe Faserart aufweist, wobei in diesem Werkstoff die Faserart mit einem zweiten Füllstoff gemischt ist. Insbesondere wird in diesem Dokument unter "Werkstoff" ein CMC-Werkstoff, welcher mindestens eine Faserart von mindestens einer Faserlänge in Kombination mit einem Harz und wahlweise mindestens einem Füllstoff enthält, verstanden. Ein gradierter CMC-Werkstoff enthält demnach mindestens zwei CMC-Werkstoffe wobei sich mindestens die Faserart, Harzart, Faserlänge oder wahlweise ein Füllstoff der zwei CMC-Werkstoffe unterscheiden.

Unter einem "**Pulverharz**" wird ein vor der Härtung pulverförmig vorliegendes Harz verstanden. Harze werden grundsätzlich in Naturharze und Kunstharze unterschieden. Naturharze sind dabei Gemische von festen, amorphen, nichtflüchtigen, lipophilen Pflanzenprodukten. Sie treten nach natürlichen oder künstlichen Verletzungen als zähflüssige Masse aus bestimmten Pflanzen, überwiegend Bäumen, aus. Harze in dem hiesigen Kontext sind hingegen üblicherweise Kunstharze, d.h. durch Polymerisations-, Polyadditions- oder Polykondensationsreaktionen synthetisch hergestellte Harze. Es handelt sich um weiche Feststoffe oder hochviskose Substanzen, die üblicherweise Prepolymere mit reaktiven funktionellen Gruppen enthalten. Synthetische Harze bestehen bei der Verarbeitung in der Regel aus zwei Hauptkomponenten. Die Vermischung beider Teile, Harz und Härter genannt, ergibt eine reaktionsfähige Harzmasse. Bei der Härtung steigt die Viskosität an und nach abgeschlossener Härtung erhält man einen unschmelzbaren Kunststoff, d.h. einen Duroplast.

Der Begriff "**Pyrolyse**" bezeichnet einen thermo-chemischen Umwandlungsprozess, in dem eine Verbindungen, also ein Startmaterial oder **Präcursor,** bei hohen Temperaturen und weitgehend unter Ausschluss von Sauerstoff gespalten wird.

Faserverbundkeramiken sind thermoschockbeständig. Der Einsatz von gradierten Faserverbundkeramiken mit unterschiedlichen Faserverbundmaterialien als Funktionsmaterial in elektrotechnischen Anwendungen wurde bisher nicht in Betracht gezogen, da das Risiko der Schädigung der Fasern, Aufplatzung der Matrix und Bildung von schädlichen Reaktionsprodukten durch unterschiedliche Ausdehnungskoeffizienten der Fasern, schlagartige Entstehung von Pyrolysegas bei überhöhter Temperatur für die Matrix sowie der chemischen Interaktion zwischen dem Material selbst oder zwischen Material und der Ofenatmosphäre als zu groß angesehen wurde.

Durch eine Mehrzahl von Fasern aus mindestens zwei verschiedenen Werkstoffen, die in eine keramische Matrix eingebettet sind, können die elektrischen Eigenschaften des Materials in weiten Grenzen variiert werden. Dadurch, dass die Mehrzahl von Fasern jeweils eine Faserlänge von weniger als 1 mm haben, kann die Phasenmischung in feinen Abstufungen erfolgen, wodurch die elektrischen Eigenschaften sehr fein einstellbar sind. Zudem können überraschend leitende und nicht-leitende Fasern in einem Material trotz ihrer unterschiedlichen Ausdehnungskoeffizienten zusammen eingebracht werden, da sich die Fasern zwar ausdehnen, durch ihre auf weniger als 1 mm begrenzte Länge jedoch die unterschiedlichen Ausdehnungskoeffizienten keinen nennenswerten Einfluss auf die Gesamtausdehnung haben. Es entstehen so keine Delaminationsrisse. Es hat sich zudem gezeigt, dass auch mehrere unterschiedliche Mischungen zusammen in einem Material flexibel miteinander ohne Delaminationsrisse und ohne Spannungsrisse kombiniert werden können.

Die keramische Matrix kann auf einem Harz, insbesondere einem Kunstharz basieren. Ein solches Harz eignet sich gut als Matrix für Fasern und lässt sich leicht verarbeiten, wobei die Gefahr einer Faserschädigung klein ist. Die Mehrzahl von Fasern aus mindestens zwei verschiedenen Werkstoffen sind in eine keramische Matrix eingebettet, d.h. von dem Matrixwerkstoff umschlossen, insbesondere vollständig umschlossen, wodurch die Matrix die Fasern vor einer Reaktion mit anderen Fasern sowie der Ofen-Umgebung während der Prozessierung schützt.

In einer vorteilhaften Ausführungsform des faserverbundkeramischen Materials befindet sich unter den mindestens zwei verschiedenen Werkstoffen der Mehrzahl von Fasern mindestens ein leitender und mindestens ein nichtleitender Werkstoff. Damit lassen sich auch Faserverbundkeramiken herstellen, die Resistivitäten p zwischen 10² Ωmm²/m und 10¹² Ωmm²/m aufweisen. Bei den mindestens zwei verschiedenen Werkstoffen der Mehrzahl von Fasern kann es sich um einen kohlenstoffhaltigen und einen aluminiumoxidhaltigen Werkstoff handeln.

In einer weiteren vorteilhaften Ausführungsform des faserverbundkeramischen Materials liegt die Resistivität des faserverbundkeramischen Materials p zwischen 10⁰ Ωmm²/m und 10²⁰ Ωmm²/m, insbesondere 10² Ωmm²/m und 10¹² Ωmm²/m. Damit ist die Herstellung von Leitern, Halbleitern und Isolatoren aus dem faserverbundkeramischen Material möglich.

In einer weiteren vorteilhaften Ausführungsform des faserverbundkeramischen Materials ist die Resistivität des faserverbundkeramischen Materials über die Länge der verwendeten Fasern von 15µm bis endlos, bevorzugt von 50µm bis 1mm, eingestellt.

In einer weiteren vorteilhaften Ausführungsform des faserverbundkeramischen Materials weist das faserverbundkeramische Material mindestens zwei unterschiedliche Phasen auf, wobei die mindestens zwei unterschiedliche Phasen unterschiedliche Resistivitäten aufweisen. Hierdurch können die elektrischen Eigenschaften einzelner Phasen und damit die elektrischen Eigenschaften des faserverbundkeramischen Materials besonders fein eingestellt werden.

Insbesondere kann die Resistivität des faserverbundkeramischen Materials (CMC) über sein Faser-/Matrixvolumen, über das Verhältnis der Resistivitäten der mindestens zwei unterschiedlichen Phasen und/oder über die Beimischung von Karbiden, insbesondere von Metallkarbiden, und/oder anderen Füllstoffen, insbesondere Graphit, eingestellt sein.

In einer weiteren vorteilhaften Ausführungsform des faserverbundkeramischen Materials weist das faserverbundkeramische Material eine Porosität von weniger als 10% auf. Eine Porosität von weniger als 10% hat sich hinsichtlich der elektrischen Leitfähigkeit sowie der Wärmeleitfähigkeit als vorteilhaft erwiesen. Material mit einer Porosität von weniger als 10% lässt sich ohne Materialausbrüche mechanisch bearbeiten, beispielsweise sägen, schleifen und polieren, was auch bei der elektrischen Kontaktierung vorteilhaft ist. Bei einer Porosität von mehr als 10% ist das Material nicht stakt genug für den mechanischen Dauereinsatz. Ist mehr Luft in einer Probe, steigt darüber hinaus der elektrische und thermische Widerstand an.

Das erfindungsgemäße Verfahren zur Herstellung eines faserverbundkeramischen Materials (CMC) für eine elektrotechnische Anwendung weist die folgenden Schritte auf:
a. Bereitstellung von Fasern aus mindestens zwei verschiedenen Werkstoffen mit einer Faserlänge von jeweils weniger als 1 mm;
b. Vermischen der bereitgestellten Fasern mit einem Pulverharz;
c. Verpressen der Mischung der Fasern mit dem Pulverharz; und
d. Keramisierung des Pulverharzes.

Die Fasern können als außerhalb des Verfahrens hergestellte Fasern als auch als zumindest teilweise inline, d.h. innerhalb des Verfahrens, hergestellte Fasern bereitgestellt werden. Zumindest der Schritt der Ablängung von Langfasern beispielsweise durch Mahlen, beispielsweise mittels einer Schwingkugelmühle, lässt sich leicht in den Herstellungsprozess integrieren. Dabei werden die Fasern so lange gemahlen, bis sich möglichst viele Fasernester aufgelöst haben.

Um anschließend die Fasermischung in Form zu halten, wird ein Pulverharz mit den Fasern vermischt und in einem Heizpresszyklus verpresst. Mehrere Fasermischungen übereinander in eine Pressform einzubringen, ermöglicht zudem dünne Schichtaufbauten und somit eine elektrische Gradierung der Materialresistivität. Durch die Art der Rohmaterialien sind auch Kombinationen möglich, die auch die Verarbeitung in Spritzguss-/Lackier- oder Rakelverfahren zulassen. Somit sind komplex geformte Hybridkeramiken möglich. Als weitere Möglichkeit für eine Veränderung der Resistivität kommt die räumliche Orientierung von leitfähigen Fasern im Verhältnis zum Stromfluss in der Probe in Frage.

Nun erfolgt die Keramisierung des Pulverharzes.

In einer vorteilhaften Ausführungsform des Verfahrens erfolgt die Keramisierung des Pulverharzes durch eine Pyrolyse. Die Pyrolyse erfolgt bei einer Temperatur von weniger als 1.300°C. Da die Faserverbundkeramik keine Endlosfasern als Stützgerüst aufweist, ist sie anfällig für Rissentstehung durch die schlagartige Bildung von Pyrolysegas. Um diesen Effekt zu minimieren, können die Heizraten und/oder die maximale Pyrolysetemperatur verringert werden. Damit können auch selbst unterschiedliche Mischungen in einem einzelnen Werkstoffverbund delaminationsfrei miteinander keramisiert werden. Darüber hinaus wird durch die verringerte Pyrolysetemperatur auch die Gefahr der Oxidation der Fasern während der Pyrolyse verringert. Zusätzlich kann der Ofenraum mit einem Inertgas, beispielsweise Argon, durchflutet werden. Dies verringert das Risiko, dass eine Faser von Sauerstoff angegriffen wird, weiter.

In einer weiteren vorteilhaften Ausführungsform des Verfahrens ist nach der Keramisierung des Pulverharzes eine RTM-Nachinfiltration vorgesehen. Während der Pyrolyse schrumpft das Harz, sodass in den Proben Porosität entsteht. Diese wird durch die RTM-Nachinfiltration von Pulverharz und evtl. Flüssigharz aufgefüllt. Um die Porosität auf den Zielwert von <10% zu bringen, können die Faserverbundkeramiken nach dem Verpressen vier Mal pyrolysiert und drei Mal nachinfiltriert werden, d.h. nach der ersten, zweiten und dritten Pyrolyse wird jeweils nachinfiltriert und der Prozess mit einer letzten, vierten Pyrolyse abgeschlossen.

Die erfindungsgemäße Verwendung eines faserverbundkeramischen Materials (CMC) wie vorbeschrieben oder eines faserverbundkeramischen Materials (CMC), das mit einem vorbeschriebenen Verfahren hergestellt ist, besteht in einer elektrotechnischen Anwendung, wobei das faserverbundkeramische Material eine Resistivität aufweist, die auf den Anwendungszweck eingestellt ist.

Soll das faserverbundkeramische Material in einem elektrischen Leiter verwendet werden, ist es vorteilhaft, die Resistivität des faserverbundkeramischen Materials auf weniger als 10² Ωmm²/m einzustellen. Insbesondere ist es vorteilhaft, wenn das faserverbundkeramische Material eine Kohlenstofffaser aufweist.

Soll das faserverbundkeramische Material in einem elektrischen Isolator verwendet werden, ist es vorteilhaft, die Resistivität des faserverbundkeramischen Materials auf mehr als 10¹² Ωmm²/m einzustellen. Dabei ist es insbesondere vorteilhaft, wenn das faserverbundkeramische Material eine Oxidfaserverbundkeramik, insbesondere eine Aluminiumoxidkeramik, aufweist.

Soll das faserverbundkeramische Material in einem elektrischen Halbleiter verwendet werden, ist es vorteilhaft, die Resistivität des faserverbundkeramischen Materials in einem Bereich zwischen 10² Ωmm²/m und 10¹² Ωmm²/m einzustellen. Dabei ist es besonders vorteilhaft, wenn das faserverbundkeramische Material eine Phasenmischung von leitfähigem und nicht-leitfähigen Fasern aufweist. Weiterhin ist es vorteilhaft, wenn das faserverbundkeramische Material mit einem Präcursormaterial verbundene kurz gemahlene C, SiC oder Al₂O₃-Fasern aufweist.

Die Resistivität des faserverbundkeramischen Materials kann beispielsweise über das Matrixvolumenverhältnis und/oder über die Beimischung von weiteren Karbiden, insbesondere von Metallkarbiden, und/oder anderen Füllstoffen, insbesondere Graphit, eingestellt werden.

Resistivitäten von heute verfügbaren Faserverbundkeramiken sind nicht variabel einstellbar. Bekannte Faserverbundkeramiken weisen außerdem starke Schwankungen bei der Resistivität auf, da das Verhältnis von Faserquerschnitt zu Matrixanteil innerhalb des Verbundes flächenmäßig grob verteilt ist. Dies bedeutet, dass die Homogenität der Leitfähigkeit nicht gewährleistet ist, da je nach Position der Kontaktierung entweder der Bereich des Faserquerschnitts oder der Matrix in den elektrischen Kreis eingebracht wird. Diese Nachteile werden durch das erfindungsgemäße faserverbundkeramische Material deutlich minimiert.

Mit einstellbaren leitfähigen Verbundkeramiken können beispielsweise Widerstandsheizer aus Faserverbundkeramik optimal an den Punkt der maximalen Wärmeabgabe verbessert werden. Dies spart Material, benötigte Gesamtheizleistung und somit Kosten. Ebenfalls möglich ist der Ersatz von Silberkontakten, die an mechanischen Abnehmern eingesetzt werden, um Strom von einer auf die andere Komponente zu übertragen. Kohlenstoffbasierte Faserverbundkeramiken können eingesetzt werden, um Abrieberscheinungen von mechanischen Abnehmern auf Keramikschaltstrecken zu reduzieren.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Es zeigen
- Fig.1:: ein Diagramm der Resistivität eines faserverbundkeramischen Materials in Abhängigkeit von der Fasermischung;
- Fig.2:: eine mikroskopische Aufnahme eines Schnitts durch ein erfindungsgemäßes faserverbundkeramisches Material; und
- Fig.3:: schematisch das erfindungsgemäße Herstellverfahren.

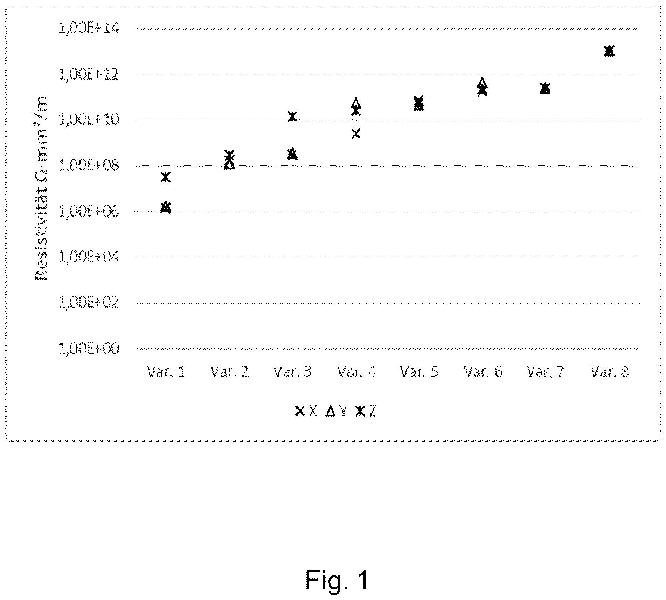

Fig. 1 zeigt in einem Diagramm die Resistivität eines faserverbundkeramischen Materials in Abhängigkeit von der Fasermischung. Auch bei unterschiedlichen Ausdehnungskoeffizienten von Kohlenstoff und Aluminiumoxid bleiben die Ausdehnungen der kurzen Fasern so klein, dass keine durchgehenden Risse im Material entstehen. Durch die Anpassung der Ofenparameter wurde ein Kompromissprozess gefunden, der Reaktionen mit der Ofenwand und den darin befindlichen Heizleitern verhindert und trotzdem die Keramisierung der Matrix sicherstellt. Werden die Faserarten vermischt, so kann beispielsweise über die Faseranteile in der Mischung die Resistivität eingestellt werden. Die Variante 1 in dem Diagramm der Fig. 1 enthält vorrangig Kohlenstofffasern und die Variante 2 vorrangig Aluminiumoxidfasern. Vorherige Entschlichtung der Fasern kann zudem ein Agglomerieren der Fasern im Mahlprozess verhindern.

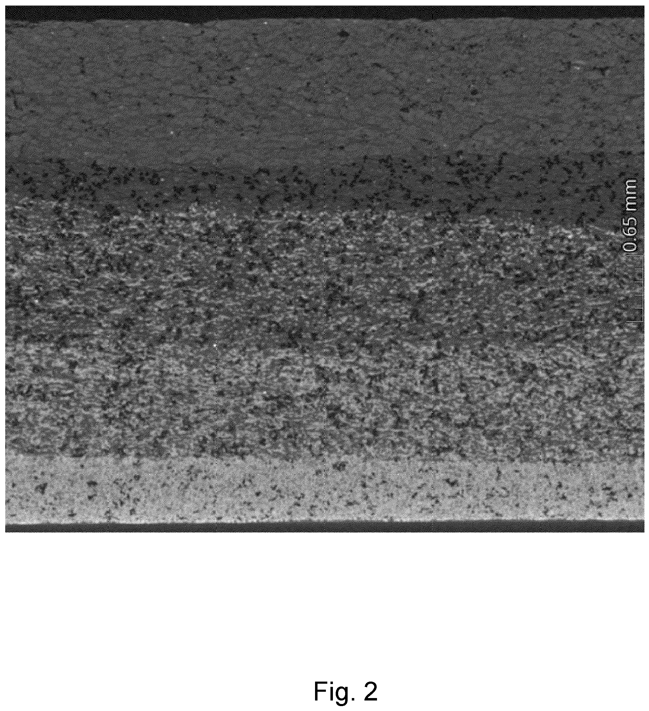

Fig. 2 zeigt eine mikroskopische Aufnahme eines Schnitts durch ein erfindungsgemäßes faserverbundkeramisches Material. In der Aufnahme ist der gradierte Aufbau eines erfindungsgemäßen faserverbundkeramischen Materials mit unten vorrangig Aluminiumoxidfasern und oben vorrangig Kohlenstofffasern zu erkennen.

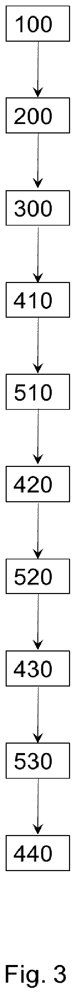

Fig. 3 zeigt schematisch das erfindungsgemäße Herstellverfahren. Das erfindungsgemäße Verfahren zur Herstellung eines faserverbundkeramischen Materials (CMC) startet mit der Bereitstellung 100 von Fasern aus mindestens zwei verschiedenen Werkstoffen mit einer Faserlänge von jeweils weniger als 1 mm. Um die Fasermischung in Form zu halten, wird ein Pulverharz mit den Fasern vermischt 200 und in einem Heizpresszyklus verpresst 300. Mehrere Fasermischungen übereinander in eine Pressform einzubringen, ermöglicht zudem dünne Schichtaufbauten und somit eine elektrische Gradierung der Materialresistivität. Durch die Art der Rohmaterialien sind auch Kombinationen möglich, die auch die Verarbeitung in Spritzguss-/Lackier- oder Rakelverfahren zulassen. Somit sind komplex geformte Hybridkeramiken möglich. Als weitere Möglichkeit für eine Veränderung der Resistivität kommt die räumliche Orientierung von leitfähigen Fasern im Verhältnis zum Stromfluss in der Probe in Frage.

Anschließend erfolgt die erste Keramisierung 410 des Pulverharzes durch eine Pyrolyse. Nach der ersten Keramisierung 410 des Pulverharzes ist eine erste RTM-Nachinfiltration 510 vorgesehen. Während der Pyrolyse 410, 420, 430, 440 schrumpft das Harz, sodass in den Proben Porosität entsteht. Diese wird durch die RTM-Nachinfiltration 510, 520, 530 von Pulverharz und Verflüssiger aufgefüllt. Um die Porosität auf den Zielwert von <10% zu bringen, wird die Faserverbundkeramik nach dem Verpressen 300 in den Schritten 410, 420, 430 und 440 vier Mal pyrolysiert und nach den ersten drei Pyrolysen 410, 420, 430 jeweils in den Schritten 510, 520 und 530 nachinfiltriert. Der Prozess wird mit einer letzten, vierten Pyrolyse 440 abgeschlossen.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Bezugszeichenliste:

- 100: Bereitstellung von Fasern aus mindestens zwei verschiedenen Werkstoffen mit einer Faserlänge von jeweils weniger als 1 mm
- 200: Vermischen der bereitgestellten Fasern mit einem Pulverharz
- 300: Verpressen der Mischung der Fasern mit dem Pulverharz
- 410: erste Keramisierung des Pulverharzes
- 420: zweite Keramisierung des Pulverharzes
- 430: dritte Keramisierung des Pulverharzes
- 440: vierte Keramisierung des Pulverharzes
- 510: erste RTM-Nachinfiltration
- 520: zweite RTM-Nachinfiltration
- 530: dritte RTM-Nachinfiltration

## Patentansprüche

1. Ein faserverbundkeramisches Material (CMC) für eine elektrotechnische Anwendung, aufweisend eine Mehrzahl von Fasern aus mindestens zwei verschiedenen Werkstoffen, eingebettet in eine keramische Matrix,
**dadurch gekennzeichnet,**
**dass** die Mehrzahl von Fasern jeweils eine Faserlänge von weniger als 12 mm, bevorzugt von weniger als 1 mm aufweisen.

2. Das faserverbundkeramische Material (CMC) gemäß Anspruch 1,
**dadurch gekennzeichnet,**
**dass** unter den mindestens zwei verschiedenen Werkstoffen der Mehrzahl von Fasern mindestens ein leitender und mindestens ein nichtleitender Werkstoff ist.

3. Das faserverbundkeramische Material (CMC) gemäß einem der vorherigen Ansprüche,
**dadurch gekennzeichnet,**
**dass** die Resistivität des faserverbundkeramischen Materials p zwischen 10⁰ Ωmm²/m und 10²⁰ Ωmm²/m, insbesondere 10² Ωmm²/m und 10¹² Ωmm²/m liegt.

4. Das faserverbundkeramische Material (CMC) gemäß einem der vorherigen Ansprüche,
**dadurch gekennzeichnet,**
**dass** die Resistivität des faserverbundkeramischen Materials über die Länge der verwendeten Fasern von 15µm bis endlos, bevorzugt von 50µm bis 1 mm, eingestellt ist.

5. Das faserverbundkeramische Material (CMC) gemäß Anspruch 4,
**dadurch gekennzeichnet,**
**dass** das faserverbundkeramische Material mindestens zwei unterschiedliche Phasen aufweist, wobei die mindestens zwei unterschiedlichen Phasen unterschiedliche Resistivitäten aufweisen.

6. Das faserverbundkeramische Material (CMC) gemäß einem der vorhergehenden Ansprüche,
**dadurch gekennzeichnet,**
**dass** das faserverbundkeramische Material (CMC) eine Porosität von weniger als 10% aufweist.

7. Ein Verfahren zur Herstellung eines faserverbundkeramischen Materials (CMC) für eine elektrotechnische Anwendung, aufweisend die Schritte
a. Bereitstellung (100) von Fasern aus mindestens zwei verschiedenen Werkstoffen mit einer Faserlänge von jeweils weniger als 1 mm;
b. Vermischen (200) der bereitgestellten Fasern mit einem Pulverharz;
c. Verpressen (300) der Mischung der Fasern mit dem Pulverharz;
d. Keramisierung (410, 420, 430, 440) des Pulverharzes.

8. Das Verfahren gemäß Anspruch 7, wobei die Keramisierung (410, 420, 430, 440) des Pulverharzes durch eine Pyrolyse geschieht, wobei die Pyrolyse bei einer Temperatur von weniger als 1.300°C durchgeführt wird.

9. Das Verfahren gemäß einem der Ansprüche 7 oder 8, wobei nach der Keramisierung des Pulverharzes eine RTM-Nachinfiltration (510, 520, 530) vorgesehen ist.

10. Eine Verwendung eines faserverbundkeramischen Materials (CMC) gemäß einem der Ansprüche 1 bis 6 oder eines faserverbundkeramischen Materials (CMC), das mit einem Verfahren gemäß einem der Ansprüche 7 bis 9 hergestellt ist, in einer elektrotechnischen Anwendung, wobei das faserverbundkeramische Material eine Resistivität aufweist, die auf den Anwendungszweck eingestellt ist.
